Europäisches Patentamt

(19) European Patent Office

Office européen des brevets

(11) Veröffentlichungsnummer: **0 179 168**
**B1**

(12) **EUROPÄISCHE PATENTSCHRIFT**

(45) Veröffentlichungstag der Patentschrift:
03.05.89

(21) Anmeldenummer: 84115573.2

(22) Anmeldetag: 17.12.84

(51) Int. Cl.⁴: **G 21 C 17/00**

(54) Reparaturhilfseinrichtung.

(30) Priorität: 09.10.84 DE 8429682 U

(43) Veröffentlichungstag der Anmeldung:
30.04.86 Patentblatt 86/18

(45) Bekanntmachung des Hinweises auf die Patenterteilung:
03.05.89 Patentblatt 89/18

(84) Benannte Vertragsstaaten:
CH FR IT LI SE

(56) Entgegenhaltungen:
EP-A- 0 052 570
DE-A- 2 830 908

KERNENERGIE, Band 22, Nr. 9, 1979, Seiten 326-331; D. PASTOR et al.: "Die erste Wiederholungsprüfung 1978 am Reaktordruckgefäss des Blockes 2 im VEB Kernkraftwerk 'Bruno Leuschner' Greifswald"

(73) Patentinhaber: **Siemens Aktiengesellschaft Berlin und München, Wittelsbacherplatz 2, D-8000 München 2 (DE)**

(72) Erfinder: **Kunz, Rainer, Kronacher Strasse 5, D-8500 Nürnberg (DE)**
Erfinder: **Stauner, Jakob, Schlossgartenstrasse 4, D-8500 Nürnberg (DE)**
Erfinder: **Weber, Robert, Esperstrasse 23, D-8525 Uttenreuth (DE)**

ACTORUM AG

## Beschreibung

Die Erfindung bezieht sich auf eine Reparaturhilfseinrichtung für wassergekühlte Kernreaktoren.

Bei Reparaturen an der Wandung des Reaktordruckbehälters oder beim Austausch von Erstabsperrarmaturen von wassergekühlten Kernreaktoren müssen diese Erstabsperrarmaturen vorher entleert werden. Dies ist jedoch nur möglich, wenn der Wasserspiegel im Reaktordruckbehälter soweit abgesenkt wird, dass er unter dem Niveau der zu reparierenden Erstabsperrarmaturen bzw. unter dem Niveau der Mündungen der entsprechenden Rohrleitungen, wie z.B. der Speisewasserverteiler liegt. Das gleiche gilt, wenn Reparaturen an der Wandung des Reaktordruckbehälters erforderlich werden. Auch in diesem Fall muss der Wasserspiegel bis unter die zu reparierende Stelle abgesenkt werden. Bei Siedewasserreaktoren und Druckwasserreaktoren setzt das voraus, dass zuvor alle Brennelemente aus dem Kernbehälter herausgenommen sein müssen. Dies ist ausserordentlich aufwendig. Darüber hinaus ist beim Entleeren des Kernbehälters und beim Absenken des Wasserspiegels im Reaktordruckbehälter mit einer deutlichen Strahlenbelastung des Bedienungs- bzw. Wartungspersonals zu rechnen. Schliesslich macht das Absenken des Wasserspiegels beim Siedewasserreaktor die Ergreifung besonderer Abschirmmassnahmen für den Dampfabscheider und Dampftrockner erforderlich.

Der Erfindung liegt die Aufgabe zugrunde einen Weg zu weisen, wie Reparaturen an den Erstabsperrarmaturen oder auch an der Wandung des Reaktordruckbehälters durchgeführt werden können, ohne dass dazu der Wasserspiegel im Reaktordruckbehälter abgesenkt werden muss.

Die gestellte Aufgabe wird erfindungsgemäss durch die im Kennzeichen des Anspruchs 1 angegebenen Merkmale gelöst.

Vorteilhafte Weiterbildungen sind in den Ansprüchen 2 bis 28 beschrieben.

Ein erfindungsgemäss im gefluteten Reaktordruckbehälter im Bereich der Speisewasserverteiler bzw. Rohrleitungsanschlüsse an der Druckbehälterwand flüssigkeitsdicht zur Anlage bringbarer Dichtkasten ermöglicht es, die abgedeckten Wandbereiche mitsamt den dort befindlichen Speisewasserverteilern bzw. Rohrleitungsanschlüssen bei geflutetem Reaktordruckbehälter zu entleeren. Bei gleich hoch bzw. höher gesetzten Erstabsperrarmaturen werden diese dabei gleichzeitig mit entleert. Andernfalls können sie dann über die anschliessende Rohrleitung entleert werden.

Der an der Innenwand des Reaktordruckbehälters angepasste Dichtkasten kann vorteilhafter Weise zugleich auch als Träger für Inspektions- Prüf- und Bearbeitungsgeräte dienen.

Die Handhabung des recht voluminösen Dichtkastens wird bedeutend erleichtert, wenn er in Weiterbildung der Neuerung an einem in den Innendurchmesser des Reaktordruckbehälters absenkbaren Tragring gehaltert ist. Ein solcher Tragring hilft zugleich auch die Anpresskräfte des Dichtkastens gegen die Innenwand des Reaktordruckbehälters auf die Wand des Reaktordruckbehälters zu übertragen. Ausserdem kann durch das sehr zweckmässige Abstützen des Tragringes am Kernmantel des Kernreaktors eine definierte Bezugshöhe des Tragringes gewährleistet werden, von der aus die weitere Verstellung des Dichtkastens relativ zum Tragring erfolgen kann. Zugleich wird so ein Kran während der laufenden Reparaturmassnahmen für andere Arbeiten, wie z.B. das Umsetzen von Brennelementen frei verfügbar.

Längs der Druckbehälterwand im Abstand zu dieser verlaufende Führungsstangen können vom Dichtkasten um- und/oder hinterfahren werden, wenn der Dichtkasten in weiterer Ausgestaltung der Erfindung am Tragring, parallel zu dessen Symmetrieachse höhenverstellbar und in Umfangsrichtung des Tragringes relativ zu diesem verschiebbar ist. Diese Bewegungen des Dichtkastens, können über Hydraulikzylinder veranlasst werden. In besonders vorteilhafter Weise können solche Relativbewegungen auch über zwischen Dichtkasten und Tragring geschaltete, an den jeweiligen Reaktortype angepasste Führungskurven erzwungen werden. Solche Führungskurven vermeiden Schäden durch Fehlbedienungen, wie sie bei allseitiger, frei wählbarer, hydraulischer Verstellung zumindest nicht ausgeschlossen sind.

Die Entleerung der vom Dichtkasten abgedeckten Rohrleitungen bzw. Speisewasserverteiler, lässt sich bei dieser Konstruktion durch eine am Dichtkasten angeschlossene Pumpe, welche vorzugsweise über einen im Dichtkasten untergebrachten Schwimmerschalter steuerbar sein kann, vornehmen. Diese ebenso einfache wie zweckmässige Lösung führt dazu, dass die Pumpe bei Undichtigkeiten oder anderen Wassereinbrüchen, soweit erforderlich, selbsttätig eingeschaltet wird.

Weil die Traversen auch zur Bedienung anderer Kerneinbauten, wie Wasserabscheider, benötigt werden und bei vielen Kernreaktortypen zur selbsttätigen Ankupplung bzw. zur exakten Absetzung dieser Kerneinbauten im Druckbehälterbereich geführt und nicht beliebig um dessen Symmetrieachse drehbar sind, ist es zur Abdeckung der im allgemeinen um jeweils 90° bzw. 180° gegeneinander versetzten Speisewasserverteiler besonders zweckmässig, wenn die Tragösen und Führungen des Tragringes am Tragring schraubbar befestigt und so umsetzbar sind. Auf diese Weise kann der Dichtkasten um jeweils 90°, 180° bzw. 270° umgesetzt werden. Darüber hinaus kann der Tragring bei teilbarer Ausführung leichter zum Einsatzort transportiert und zwischen den Einsätzen auch gelagert werden.

Weitere Einzelheiten der Erfindung werden anhand eines in den Figuren dargestellten Ausführungsbeispiels erläutert. Es zeigen:

Fig. 1 einen Querschnitt durch den oberen Teil eines geöffneten Reaktordruckbehälters mit im gefluteten Reaktordruckbehälter abgesenkten Tragring und ein über einen Speisewasserverteiler zur Anlage gebrachten Dichtkasten,

Fig. 2 einen Querschnitt längs der Linie II-II der Fig. 1

Fig. 3 eine Aufsicht auf den Tragring mit den Stellmitteln zur Verschiebung des Dichtkastens und

Fig. 4 einen Schnitt durch das Dichtprofil des Dichtkastens.

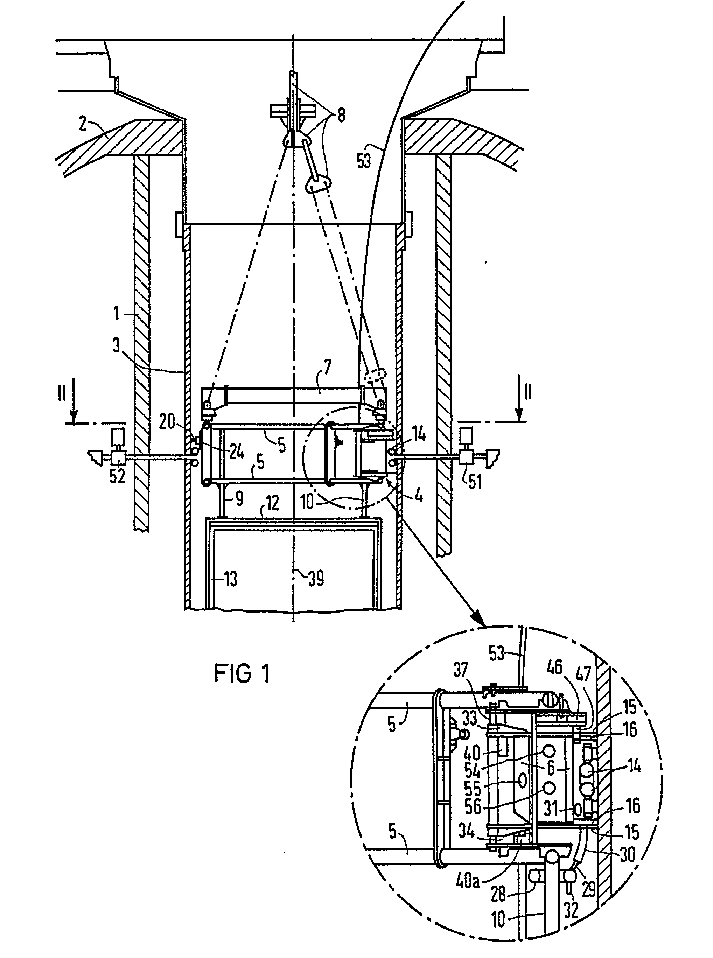

Die Fig. 1 zeigt in einer Schnittdarstellung den oberen Teil des biologischen Schildes 1, des Sicherheitsbehälters 2 und des geöffneten Reaktordruckbehälters 3 mit der eingefahrenen erfindungsgemässen Reparaturhilfseinrichtung 4. In der Darstellung der Fig. 1 sind der Tragring 5 und der Dichtkasten 6 der Reparaturhilfseinrichtung an einer Traverse 7, die am Krangeschirr 8 des Reaktorgebäudes aufgehängt ist, in den gefluteten Reaktordruckbehälter 3 herabgelassen worden. Diese Traverse 7 ist soweit in den Reaktordruckbehälter 3 abgesenkt, dass der Tragring 5 mit seinen Tragstützen 9 bis 11 auf den oberen Rand 12 des Kernbehälters 13 aufsitzt. Dabei überdeckt der an der Traverse 7 gehaltene Dichtkasten 6 den Speisewasserverteiler 14 auf der rechten Seite der Fig. 1. Er liegt mit seinem Rand 15, der mit einem umlaufenden Dichtprofil 16 versehen ist, an der Innenwand des Reaktordruckbehälters 3 an. Die übrigen drei Speisewasserverteiler 17 bis 19 sind dabei unabgedeckt.

Der Tragring 5 ist mit an seinem Umfang angeordneten Seitenstützen 20 bis 23, die mittels Anstellzylinder 24 bis 27 verstellbar sind, an der Innenwand des Reaktordruckbehälters 3 abgestützt. Unterhalb des Dichtkastens 6 ist am Tragring 5 eine Pumpe 28 befestigt, deren Ansaugstutzen 29 über einen Schlauch 30 mit dem Innenraum des Dichtkastens verbunden ist. Im Innern des Dichtkastens 6 ist ein Schwimmerschalter 31 angeordnet, der in den Stromkreis der Pumpe 28 geschaltet ist. Der Abströmstutzen 32 der Pumpe 28 ist über ein Rückschlagventil (nicht dargestellt) gesichert und mündet direkt unterhalb der Pumpe.

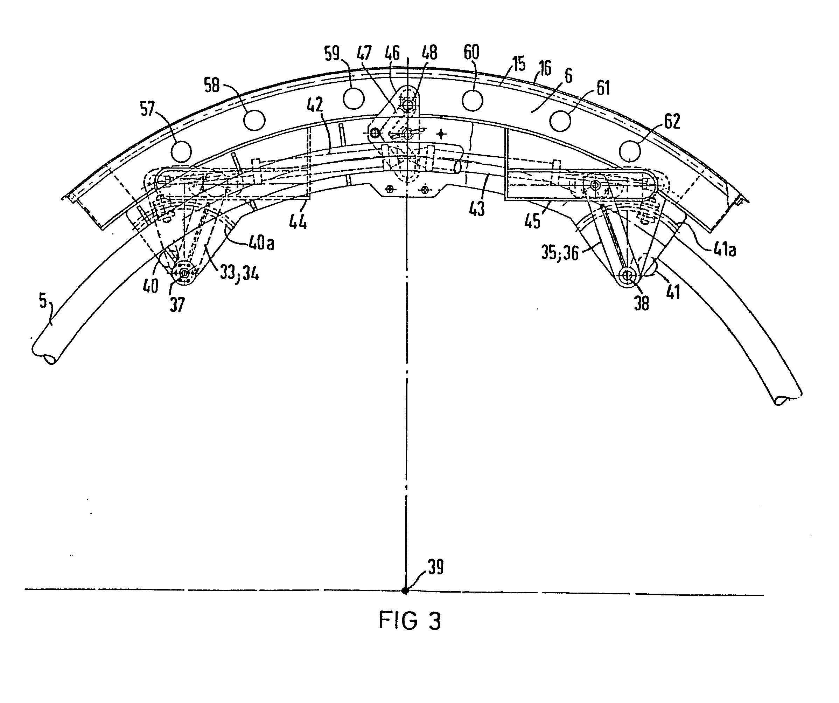

Die Figuren 1 und 3 zeigen, dass der Dichtkasten 6 über vier Ausleger 33 bis 36 mit dem Tragring 5 verbunden ist. Diese Ausleger sind ihrerseits an zwei vertikalen Führungen 37, 38, die oben und unten am Tragring 5 befestigt sind, parallel zur Symmetrieachse 39 des Tragringes, d.h. in der Höhe verschiebbar. In den Figuren 1 und 3 erkennt man auch, dass die Ausleger 33 bis 36 an beiden Seiten des Dichtkastens 6 nicht nur längs der Führungen 37, 38 höhenverstellbar, sondern auch um diese Führungen schwenkbar sind. Die Höhenverstellung erfolgt durch die parallel zu den Führungen am Tragring befestigten Hydraulikzylinder 40, 41. Für die Verschwenkung der Ausleger 33 bis 36 sind am Tragring zwei weitere Hydraulikzylinder 42, 43 (Fig. 3) angeordnet, deren Kolbenstange jede am verschwenkbaren Ende eines der Ausleger 33, 35 angreifen. Der Dichtkasten 6 trägt an seiner Ober- und Unterseite je zwei Führungsbahnen 44, 45 (nur zwei dargestellt), die in den Enden je eines Auslegers 33 bis 36 verschiebbar geführt sind. Durch gleichzeitiges gegenläufiges Verschwenken der Ausleger wird der Dichtkasten 6 radial relativ zum Tragring 5 verstellt. Weil der Dichtkasten 6 jedoch längs der Führungsbahnen 44, 45 relativ zu den beidseitigen Auslegern 33, 35 verschiebbar ist, ist am Tragring 5 oberhalb des Dichtkastens eine Kulisse 46, mit einer gewinkelten Führungsbahn 47 anschraubbar. In der gewinkelten Führungsbahn 47 greift ein am Dichtkasten befestigter Zapfen 48 ein. Über diesen, längs der gewinkelten Führungsbahn 47 der Kulisse 46 verschiebbaren Zapfen 48 wird der Dichtkasten 6 während des Verschwenkens der Ausleger 33 bis 36 nicht nur radial vorgeschoben, sondern zugleich auch seitlich verschoben und so seitlich an Einbauten vorbeigeführt.

Die Fig. 4 zeigt wie der Dichtring 16 über einen Klemmring 49 am Rand 15 des Dichtkastens 6 befestigt ist. In dieser Figur ist das im wesentlichen L-förmige Profil des Dichtringes 16 zu erkennen, welcher eine Hohlkehle 50 im Bereich der Anlagefläche aufweist. Durch diese Hohlkehle 50 ist die Dichtfläche des Dichtringes in eine schmale Dichtkante und eine stark verlängerte Dichtlippe unterteilt. Dabei wird die schmale Dichtkante durch die Anpresskraft des Dichtkastens in Unebenheiten besser hineingedrückt, während die Dichtlippe vorzugsweise durch die Druckdifferenz angedrückt wird. Die Dichtlippe wird ausserdem durch eine Federlamelle 61 an die Reaktordruckbehälterwand angedrückt.

Sollen die ausserhalb des biologischen Schildes 1 angeordneten, an den Reaktordruckbehälter 3 angeschlossenen Erstabsperrarmaturen 51, 52 eines wassergekühlten Kernreaktors repariert oder ausgewechselt werden, so brauchen zur Entleerung dieser Erstabsperrarmaturen nicht mehr wie bisher die Brennelemente aus dem Kernbehälter 13 herausgenommen zu werden, damit der Reaktordruckbehälter 3 soweit entleert werden kann, dass die Speisewasserverteiler 14, 17, 18, 19 bzw. Rohrleitungsanschlüsse oberhalb der Wasseroberfläche liegen und entleert werden können. Vielmehr genügt es jetzt, nach Abnahme des Druckbehälterdeckels und der weiteren Einbauten, den erfindungsgemässen Tragring 5 mit den daran befestigten Dichtkasten 6 mit Hilfe des Krangeschirrs 8 des Reaktorgebäudes in den gefluteten Reaktordruckbehälter 3 abzusenken, bis dessen Tragstützen 9, 10, 11 auf dem oberen Rand 12 des Kernbehälters 13 aufliegen. In dieser definierten Position können die am Umfang des Tragringes verteilten Seitenstützen 20, 21, 22, 23 über druckwasserbetätigte Anstellzylinder 24 bis 27 an die Innenwand des Reaktordruckbehälters 3 zur Anlage gebracht werden. Der Tragring 5 ist dann sowohl in der Höhenlage als auch zur Symmetrieachse 39 des Reaktordruckbehälters 3 arretiert.

Nunmehr können die den Dichtkasten 6 tragenden Ausleger 33 bis 36 über die senkrechten Hydraulikzylinder 40, 41 längs der senkrechten Führungen 37, 38 soweit verschoben werden, bis der Dichtkasten höhenzentriert zu dem abzudeckenden Speisewasserverteiler 14, 17, 18, 19 steht.

Durch anschliessendes Auseinanderschwenken der Ausleger 33 bis 36 mit Hilfe des unterhalb des Dichtkastens 6 angeordneten Hydraulikzylinder 42, 43, lässt sich der Dichtkasten 6 radial nach aussen über einen der Speisewasserverteiler 14, 17, 18, 19 und gegen die Innenwand des Reaktordruckbehälters 3 schieben, bis sein umlaufender Rand mit dem daran befestigten Dichtprofil 16 an der Innenwand des Reaktordruckbehälters anliegt. Sobald dies der Fall ist, kann die am Tragring unterhalb des Dichtkastens 6 aufgehängte Pumpe 28 eingeschaltet und der Dichtkasten leergepumpt werden. Dabei läuft auch das Wasser aus dem Speisewasserverteiler 14 und den übrigen abgedeckten Rohrleitungen einschliesslich der daran angeschlossenen Erstabsperrarmatur 51 in den Dichtkasten 6 und vom Dichtkasten über den Abströmstutzen 32 der Pumpe 28 in den offenen, gefluteten Reaktordruckbehälter 3 und strömt Luft aus dem Entlüftungsschlauch 53 in den Dichtkasten nach. Nach vollständiger Entleerung des Dichtkastens 6 sowie der dorthin mündenden Rohrleitungen schaltet die Pumpe 28 selbsttätig über den im Dichtkasten 6 untergebrachten Schwimmerschalter 31 ab. Dieser Schwimmerschalter 31 schaltet die Pumpe bei einem evtl. Wassereinbruch oder wenn sich im Dichtkasten hinreichend viel Leckwasser angesammelt hat bei Bedarf wieder neu ein.

Bei einigen Siedewasserreaktoren ragen neben den Speisewasserverteilern Führungsstangen für andere Einbauten auf, die die radiale Anlage des Dichtkastens behindern könnten. In solchen Fällen kann der Dichtkasten 6 vor der Anlage an der Druckbehälterwand mittels der vertikalen Hydraulikzylinder 40, 41 über diese Hindernisse hinweggehoben werden oder, wenn dies leichter durchführbar ist, durch Verwendung einer an den jeweiligen Reaktortyp angepassten Kulisse 46 seitlich am Hindernis vorbeibewegt werden. Letzteres kann auch durch Drehen des gesamten Tragringes 5 mittels des Krangeschirres 8 unterstützt werden, sofern der Tragring 5 im Reaktordruckbehälter nicht verdrehsicher geführt ist. Auf diese Weise lassen sich solche Hindernisse mit dem Dichtkasten umfahren oder bei ausreichendem Wandabstand derselben auch hinterfahren.

Die in der vorgeschilderten Weise entleerten Erstabsperrarmaturen 51, 52 können so ausgebaut werden, ohne dass zuvor die Brennelemente aus dem Kernbehälter 10 entnommen und der Wasserspiegel im Reaktordruckbehälter 3 hätte abgesenkt werden müssen. Nach erfolgter Wartung oder Auswechslung der Erstabsperrarmaturen kann der Dichtkasten nach vorherigem Fluten durch Betätigen der die Ausleger 33 bis 36 schwenkenden Hydraulikzylinder 42, 43 wieder von der Wand des Reaktordruckbehälters abgezogen und mitsamt dem Tragring 5 vom Krangeschirr 8 aus dem Reaktordruckbehälter herausgefahren werden.

Die übrigen, im allgemeinen um 90° gegeneinander versetzten Speisewasserverteiler 17 bis 19 und Rohrleitungsanschlüsse lassen sich bei nicht verdrehsicher im Reaktordruckbehälter 3 geführter Traverse 7, durch entsprechendes Drehen der Traverse 7 mit dem daran befestigten Tragring 5 um einen entsprechenden Winkel und erneutem Absenken nacheinander in der geschilderten Weise warten bzw. auswechseln. Bei verdrehsicher geführter Traverse hingegen müssen alternativ der Dichtkasten 6 sowie die Tragösen, Führungen und Kulissen am Tragring 5 umgesetzt werden, so dass die Traverse 7 nicht um die Symmetrieachse 39 des Reaktordruckbehälters 3 gedreht zu werden braucht und stattdessen der Tragring 8 um die Symmetrieachse gedreht an der Traverse 7 wieder angehängt werden kann. Aus diesem Grunde sind diese Bauelemente am Tragring ab- und umschraubbar befestigt. Auch der An- und Abtransport sowie die Lagerung des Tragringes werden bei einem teilbar ausgeführten, verschraubten Tragring bedeutend vereinfacht.

Dadurch, dass der Innendurchmesser des Tragringes unverbaut ist und in seiner lichten Weite an den Durchmesser des Randes des Kernbehälters angepasst und auf diesen während der Reparatur der Erstabsperrarmaturen abgestellt wird, wird der Kran des Reaktorgebäudes für die Dauer der Reparatur bzw. Auswechslung frei. So können in der Zwischenzeit beispielsweise Brennelemente umgesetzt werden. Hierdurch wird die Abschaltzeit des Kernreaktors zusätzlich bedeutend verkürzt.

Der Dichtkasten lässt sich aber nicht nur dazu verwenden, um bei gefluteten Reaktordruckbehälter bestimmte in den Reaktordruckbehälter mündende Rohrleitungen zu entleeren, sondern auch dazu, beliebige Wandbereiche des Reaktordruckbehälters nach verschiedenen, sonst nicht anwendbaren Verfahren zu untersuchen und zu reparieren. So können im Dichtkasten nicht nur Lichtquellen und Fernsehkameras untergebracht werden um die überdeckten Wandbereiche optisch zu betrachten, sondern es können im Dichtkasten auch fernsteuerbare Wirbelstromsonden und Einrichtungen zur Durchführung des Farbeindringverfahrens eingebaut werden, die sonst bei gefluteten Wandabschnitten nicht anwendbar wären. Schliesslich bietet der schon infolge des hydrostatischen Druckes fest an der Wand des Reaktordruckbehälters angepresste Dichtkasten eine brauchbare Plattform, um fernsteuerbare Schleif-, Fräs- und Schweissmaschinen im Dichtkasten zu betreiben. So können unter Fernsehüberwachung und ohne nennenswerte Strahlenbelastung Reparaturen aller Art durchgeführt werden. Hierbei ist es besonders hilfreich, wenn zur Aussenbeobachtung durch zusätzliche Fernsehkameras und/oder Lichtquellen in der Wand des Dichtkastens (6) wie in den Figuren 1 und 3 angedeutet, Fenster 54 bis 60 eingelassen sind.

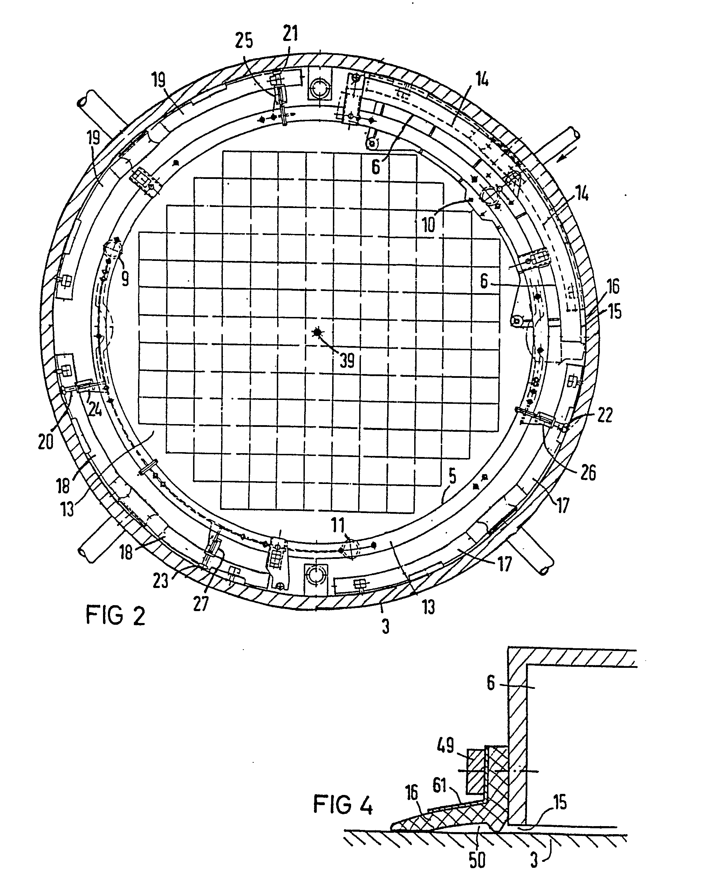

Bei dem in den Figuren 1 bis 3 gezeigten Konstruktionsbeispiel der Reparaturhilfeinrichtung 4 könnte auch die Kulisse 46 durch einen Hydraulik-Arbeitszylinder ersetzt werden. Andererseits könnten aber auch die für die Höhenverstellung des Dichtkastens zuständigen beiden Hydraulikzylinder 40, 41 durch an den örtlichen Verhältnissen des jeweiligen Reaktortyps angepasste Kulissen 40a, 41a, ersetzt werden, die die Ausleger beim Verschwenken soweit anheben, wie es bei diesem Reaktortyp zweckmässig ist. Die Zwangsführung des Dichtkastens über Kulissen bzw. Führungskurven vermeidet Fehlbedienungen.

Bezugszeichenliste

| | |
|---|---|
| Biologischer Schild | 1 |
| Sicherheitsbehälter | 2 |
| Reaktordruckbehälter | 3 |
| Reparaturhilfseinrichtung | 4 |
| Tragring | 5 |
| Dichtkasten | 6 |
| Traverse | 7 |
| Krangeschirr | 8 |
| Tragstützen | 9, 10, 11 |
| oberer Rand | 12 |
| Kernbehälter | 13 |
| Speisewasserverteiler | 14 |
| Rand des Dichtkastens | 15 |
| Dichtring | 16 |
| Speisewasserverteiler | 17, 18, 19 |
| Seitenstützen | 20, 21, 22, 23 |
| Anstellzylinder | 24, 25, 26, 27 |
| Pumpe | 28 |
| Ansaugstutzen | 29 |
| Schlauch | 30 |
| Schwimmerschalter | 31 |
| Abströmstutzen | 32 |
| Ausleger | 33, 34, 35, 36 |
| vertikale Führung | 37, 38 |
| Symmetrieachse | 39 |
| Hydraulikzylinder | 40, 41 |
| Hydraulikzylinder | 42, 43 |
| Führungsbahn | 44, 45 |
| Kulisse | 46 |
| gewinkelte Führungsbahn | 47 |
| Zapfen | 48 |
| Klemmring | 49 |
| Hohlkehle | 50 |
| Erstabsperrarmatur | 51, 52 |
| Entlüftungsschlauch | 53 |
| Fenster | 54, 55, 56, 57, 58, 59, 60 |
| Federlamelle | 61 |

## Patentansprüche

1. Reparaturhilfseinrichtung für wassergekühlte Kernreaktoren, gekennzeichnet durch einen im geöffneten, gefluteten Reaktordruckbehälter (3), an der Druckbehälterwand flüssigkeitsdicht zur Anlage bringbaren Dichtkasten (6) mit Mitteln (33–36, 42, 43) zur Anpressung des Dichtkastens an die Druckbehälterwand und mit Mitteln (28–32, 53) zur Entleerung der vom Dichtkasten und von der Druckbehälterwand eingeschlossenen Rohrleitungen, die sich im Inneren oder an der Innenwand des Druckbehälters befinden.

2. Reparaturhilfseinrichtung nach Anspruch 1, dadurch gekennzeichnet, dass der Dichtkasten zur Reparatur von Erstabsperrarmaturen der Reaktordruckbehälter (3) im Bereich der Speisewasserverteiler (14, 17, 18, 19) bzw. der Rohrleitungsanschlüsse zur Anlage gebracht wird.

3. Reparaturhilfseinrichtung nach Anspruch 1, dadurch gekennzeichnet, dass der Dichtkasten (6) in seinem Inneren Halterungen zur Befestigung von Inspektions-, Prüf- und Bearbeitungsgeräten besitzt.

4. Reparaturhilfseinrichtung nach Anspruch 1, dadurch gekennzeichnet, dass der Dichtkasten (6) an einem in den Innendurchmesser des Reaktordruckbehälters (3) absenkbaren Tragring (5) gehaltert ist.

5. Reparaturhilfseinrichtung nach Anspruch 4, dadurch gekennzeichnet, dass der Tragring (5) mit dem Kernbehälter (13) des Kernreaktors in Eingriff bringbare Tragstützen (9 bis 11) versehen ist.

6. Reparaturhilfseinrichtung nach Anspruch 4, dadurch gekennzeichnet, dass am Aussenumfang des Tragringes (5) mit der Innenwand des Reaktordruckbehälters (3) in Eingriff bringbare Seitenstützen (20–23) zur Aufnahme der radialen Anpresskräfte des Dichtkastens (6) angeordnet sind.

7. Reparaturhilfseinrichtung nach Anspruch 6, dadurch gekennzeichnet, dass die Seitenstützen (20–23) über Anstellzylinder (24–27) gegen die Innenwand des Reaktordruckbehälters (3) verschiebbar sind.

8. Reparaturhilfseinrichtung nach Anspruch 4, dadurch gekennzeichnet, dass der Dichtkasten (6) radial zum Tragring (5) verschiebbar ist.

9. Reparaturhilfseinrichtung nach Anspruch 4, dadurch gekennzeichnet, dass der Dichtkasten (6) am Tragring (5) in Umfangsrichtung des Tragringes relativ zu diesem verschiebbar ist.

10. Reparaturhilfseinrichtung nach Anspruch 4, dadurch gekennzeichnet, dass der Dichtkasten (6) am Tragring (5) in einer Führung (37, 38) parallel zur Symmetrieachse (39) des Tragringes höhenverschiebbar ist.

11. Reparaturhilfseinrichtung nach einem der Ansprüche 8, 9 und 10, dadurch gekennzeichnet, dass die Verschiebungen des Dichtkastens (6) relativ zum Tragring (5) mittels Hydraulikzylinder (40–43) steuerbar sind.

12. Reparaturhilfseinrichtung nach einem der Ansprüche 9 und 10, dadurch gekennzeichnet, dass die Verschiebungen des Dichtkastens (6) relativ zum Tragring (5) unter Verwendung von an den jeweiligen Reaktortyp angepassten Führungskurven (40a, 41a, 46, 47) bei der Verschiebung in radialer Richtung erzwungen wird.

13. Reparaturhilfseinrichtung nach Anspruch 1, dadurch gekennzeichnet, dass die Dimensionierung des Dichtkastens (6) in Richtung des Durchmessers des Reaktordruckbehälters (3) nur so gross ist, dass der in radialer Richtung in den Reaktordruckbehälter ragende Verteiler (14, 17, 18, 19) gerade noch von dem Dichtkasten eingeschlossen wird und sowohl der Tragring (5) wie auch der Dichtkasten (6) bei der Anlage an der Wand des Reaktordruckbehälters einen lichten Durchmesser freilassen, der grösser ist als der doppelte Abstand der äusseren Brennelemente von der Symmetrieachse (39) des Reaktordruckbehälters.

14. Reparaturhilfseinrichtung nach Anspruch 1, dadurch gekennzeichnet, dass die an der Wandung des Reaktordruckbehälters (3) anliegenden Ränder (15) des Dichtkastens (6) Dichtlippen (16) tragen.

15. Reparaturhilfseinrichtung nach Anspruch 14, dadurch gekennzeichnet, dass die Dichtlippe (16) im Querschnitt annähernd L-förmig ausgebildet ist und im Bereich ihrer breiten, an den Reaktordruckbehälter (3) anliegenden Seite durch eine flache, Hohlkehle (5) in eine schmale Dichtkante und eine breite Dichtlippe unterteilt ist.

16. Reparaturhilfseinrichtung nach Anspruch 1, dadurch gekennzeichnet, dass der Dichtkasten (6) zur Entleerung an eine Pumpe (28) anschliessbar ist.

17. Reparaturhilfseinrichtung nach Anspruch 16, dadurch gekennzeichnet, dass die Pumpe (28) über einen im Dichtkasten (6) befindlichen Schwimmerschalter (31) steuerbar ist.

18. Reparaturhilfseinrichtung nach Anspruch 16, dadurch gekennzeichnet, dass die Pumpe im Dichtkasten (6) einbaubar ist.

19. Reparaturhilfseinrichtung nach Anspruch 1, dadurch gekennzeichnet, dass der Dichtkasten (6) an einen oberhalb des Wasserspiegels mündenden Belüftungsschlauch (53) anschliessbar ist.

20. Reparaturhilfseinrichtung nach Anspruch 4, dadurch gekennzeichnet, dass der Tragring (5) teilbar ausgeführt ist.

21. Reparaturhilfseinrichtung nach Anspruch 1 und 4, dadurch gekennzeichnet, dass Tragösen und Führungen (40a, 41a, 46, 47) des Tragringes (5) zur Reparatur aller vier Speisewasserverteiler (14, 17, 18, 19) ein- und desselben Reaktordruckbehälters (3) am Tragring schraubbar befestigt und längs seines Umfanges umsetzbar sind.

22. Reparaturhilfseinrichtung nach Anspruch 1 oder 3, dadurch gekennzeichnet, dass der Dichtkasten (6) ganz oder teilweise aus durchsichtigem Material gefertigt ist.

23. Reparaturhilfseinrichtung nach Anspruch 22, dadurch gekennzeichnet, dass der Dichtkasten mit glasklar durchsichtigen Fenstern (54 bis 60) versehen ist.

24. Reparaturhilfseinrichtung nach Anspruch 3, dadurch gekennzeichnet, dass im Dichtkasten (6) mindestens eine Lichtquelle und eine Fernsehkamera montierbar sind.

25. Reparaturhilfseinrichtung nach Anspruch 24, dadurch gekennzeichnet, dass die Fernsehkamera entlang der Wandung des Dichtkastens verfahrbar und verstellbar ist.

26. Reparaturhilfseinrichtung nach Anspruch 3, dadurch gekennzeichnet, dass im Dichtkasten (6) fernsteuerbare Träger mit Sonden zur Wirbelstromprüfung, mit Ultraschallprüfköpfen oder mit Einrichtungen zur Durchführung des Farbeindringverfahrens befestigbar sind.

27. Reparaturhilfseinrichtung nach Anspruch 3, dadurch gekennzeichnet, dass im Dichtkasten (6) fernsteuerbare Träger mit Einrichtungen zum Fräsen, Schleifen oder Schweissen befestigbar sind.

28. Reparaturhilfseinrichtung nach Anspruch 5 oder 9, dadurch gekennzeichnet, dass die Hydraulikzylinder (24–27, 40–43) zur Vermeidung jeder Verunreinigung mit Druckwasser beaufschlagbar sind.

**Revendications**

1. Dispositif auxiliaire de réparation de réacteurs nucléaires à refroidissement par de l'eau, caractérisé par un caisson d'étanchéité (6) susceptible d'être appliqué d'une manière étanche au liquide à la paroi de la cuve sous pression ouverte et immergée d'un réacteur nucléaire, avec des moyens (33–36, 42, 43) destinés à repousser le caisson d'étanchéité sur la paroi de la cuve sous pression et des moyens (28–32, 53) destinés à vider les conduits se trouvant enfermés, à l'intérieur ou sur la paroi intérieure de la cuve sous pression, par le caisson d'étanchéité et par la paroi de la cuve du réacteur.

2. Dispositif auxiliaire de réparation suivant la revendication 1, caractérisé en ce que, pour réparer les vannes d'arrêt primaires de la cuve sous pression du réacteur (3), le caisson d'étanchéité est appliqué dans la région du répartiteur d'eau d'alimentation (14, 17, 18, 19) et des raccords de conduits.

3. Dispositif auxiliaire de réparation suivant la revendication 1, caractérisé en ce que le caisson d'étanchéité (6) possède, à l'intérieur, des pièces de fixation d'appareils d'inspection, de vérification et de traitement.

4. Dispositif auxiliaire de réparation suivant la revendication 1, caractérisé en ce que, le caisson d'étanchéité (6) est monté sur un anneau porteur (5) qui peut être abaissé dans le diamètre intérieur de la cuve sous pression du réacteur (3).

5. Dispositif auxiliaire de réparation suivant la revendication 4, caractérisé en ce que, l'anneau porteur (5) est muni de montants (9 à 11) qui peuvent venir en contact avec l'enveloppe du cœur du réacteur nucléaire.

6. Dispositif auxiliaire de réparation suivant la revendication 4, caractérisé en ce que, sur le pourtour extérieur de l'anneau porteur (5) sont montés des appuis latéraux (20 à 23) qui peuvent venir en contact avec la paroi intérieure de la cuve sous pression du réacteur (3), et qui sont destinés à absorber les forces radiales de pression du caisson d'étanchéité (6).

7. Dispositif auxiliaire de réparation suivant la revendication 6, caractérisé en ce que, les appuis latéraux (20 à 23) peuvent coulisser par des vérins de réglage (24 à 27) contre la paroi intérieure de la cuve sous pression du réacteur (3).

8. Dispositif auxiliaire de réparation suivant la revendication 4, caractérisé en ce que, le caisson d'étanchéité (6) est monté avec possibilité de se déplacer radialement vers l'anneau porteur (5).

9. Dispositif auxiliaire de réparation suivant la revendication 4, caractérisé en ce que, le caisson d'étanchéité (6) est monté sur l'anneau porteur (5) avec possibilité de se déplacer, par rapport à ce dernier, dans la direction périphérique de l'anneau porteur.

10. Dispositif auxiliaire de réparation suivant la revendication 4, caractérisé en ce que, le caisson d'étanchéité (6) est monté déplaçable en hauteur sur l'anneau porteur (5) dans une glissière (37, 38), parallèlement à l'axe de symétrie (39) de l'anneau porteur.

11. Dispositif auxiliaire de réparation suivant l'une des revendications 8, 9 et 10, caractérisé en ce que, les déplacements du caisson d'étanchéité (6) par rapport à l'anneau porteur (5), peuvent être commandés au moyen de vérins hydrauliques (40 à 43).

12. Dispositif auxiliaire de réparation suivant l'une des revendications 9 et 10, caractérisé en ce que, les déplacements du caisson d'étanchéité (6), par rapport à l'anneau porteur (5), sont obtenus positivement lors du déplacement dans la direction radiale, en utilisant des cames de guidage (40a, 41a, 46, 47) adaptées à chaque type de réacteur.

13. Dispositif auxiliaire de réparation suivant la revendication 1, caractérisé en ce que, la dimension du caisson d'étanchéité (6), dans la direction du diamètre de la cuve sous pression du réacteur (3), n'atteint qu'une valeur telle que le répartiteur (14, 17, 18, 19) faisant saillie dans la direction radiale dans la cuve sous pression du réacteur soit encore enfermée par le caisson d'étanchéité et aussi bien l'anneau porteur (5) que le caisson d'étanchéité (6) dégagent, lors de l'application à la paroi de la cuve sous pression du réacteur, un diamètre libre qui est plus grand que le double de la distance entre les assemblages combustibles extérieurs et l'axe de symétrie (39) de la cuve sous pression du réacteur.

14. Dispositif auxiliaire de réparation suivant la revendication 1, caractérisé en ce que, les bords (15) du caisson d'étanchéité (6), qui s'appliquent à la paroi de la cuve sous pression du réacteur (3), portent des lèvres d'étanchéité (16).

15. Dispositif auxiliaire de réparation suivant la revendication 14, caractérisé en ce que la lèvre d'étanchéité (16) affecte, en section transversale, sensiblement la forme d'un L et, dans la région de son côté large s'appliquant à la cuve sous pression du réacteur (3), est subdivisée en un bord d'étanchéité étroit et en une lèvre d'étanchéité large par une gorge (50) plate.

16. Dispositif auxiliaire de réparation suivant la revendication 1, caractérisé en ce que, le caisson d'étanchéité est susceptible d'être raccordé à une pompe (28) pour la vidange.

17. Dispositif auxiliaire de réparation suivant la revendication 16, caractérisé en ce que, la pompe (28) est susceptible d'être commandée par un interrupteur à flotteur (31) se trouvant dans le caisson d'étanchéité (6).

18. Dispositif auxiliaire de réparation suivant la revendication 16, caractérisé en ce que, la pompe est susceptible d'être incorporée au caisson d'étanchéité (6).

19. Dispositif auxiliaire de réparation suivant la revendication 1, caractérisé en ce que le caisson d'étanchéité (6) est susceptible d'être raccordé à un conduit souple de purge de l'eau (53) débouchant au-dessus du niveau de l'eau.

20. Dispositif auxiliaire de réparation suivant la revendication 4, caractérisé en ce que, l'anneau porteur (5) est conçu de manière divisible.

21. Dispositif auxiliaire de réparation suivant la revendication 1 ou 4, caractérisé en ce que, des œillets porteurs et des glissières (40a, 41a, 46, 47) de l'anneau porteur (5) sont, pour la réparation des quatre répartiteurs d'eau d'alimentation (14, 17, 18, 19) d'une seule et même cuve sous pression de réacteur (3), fixés par vissage à l'anneau porteur et peuvent être changé de position le long de son pourtour.

22. Dispositif auxiliaire de réparation suivant la revendication 1 ou 3, caractérisé en ce que, le caisson d'étanchéité (6) est en tout ou partie en un matériau transparent.

23. Dispositif auxiliaire de réparation suivant la revendication 22, caractérisé en ce que, le caisson d'étanchéité est muni d'hublots (54 à 60) transparents, clairs comme le verre.

24. Dispositif auxiliaire de réparation suivant la revendication 3, caractérisé en ce que, dans le caisson d'étanchéité (6) sont montées au moins une source lumineuse et une caméra de télévision.

25. Dispositif auxiliaire de réparation suivant la revendication 24, caractérisé en ce que, la caméra de télévision est susceptible d'être déplacée le long de la paroi du caisson d'étanchéité et est orientable.

26. Dispositif auxiliaire de réparation suivant la revendication 3, caractérisé en ce que, dans le caisson d'étanchéité (6) sont susceptibles d'être fixés des supports pouvant être télécommandés et ayant des sondes de vérification d'un écoulement tourbillonnaire, des têtes de vérification à ultrasons ou des dispositifs pour effectuer le procédé de pénétration de colorants.

27. Dispositif auxiliaire de réparation suivant la revendication 3, caractérisé en ce que, dans le caisson d'étanchéité (6) sont susceptibles d'être fixés des supports pouvant être télécommandés et ayant des dispositifs de fraisage, de meulage ou de soudage.

28. Dispositif auxiliaire de réparation suivant la revendication 5 ou 9, caractérisé en ce que, les vérins hydrauliques (24 à 27, 40 à 43) sont susceptibles d'être alimentés en eau sous pression pour empêcher toute contamination.

**Claims**

1. An auxiliary repair device for water-cooled nuclear reactors, characterised by a sealing box (6), which can be brought to abut in a liquid-tight manner against the pressure vessel wall in the opened, flooded ractor pressure vessel, said sealing box comprising means (33–36, 42, 43) for pressing the sealing box against the pressure vessel wall and means (28–32, 53) for emptying the conduits, which are enclosed by the pressure vessel wall and which are disposed within the pressure vessel or at the inner wall thereof.

2. An auxiliary repair device according to claim 1, characterised in that, for the repair of primary shut-off valves of the reactor pressure vessel (3), the sealing box is brought to abut in the region of the feed water distributors (14, 17, 18, 19) or the conduit connections.

3. An auxiliary repair device according to claim 1, characterised in that, in its interior, the sealing box (6) comprises securing means for securing inspection, testing and machining devices.

4. An auxiliary repair device according to claim 1, characterised in that the sealing box (6) is mounted on a supporting ring (5) which can be lowered into the internal diameter of the reactor pressure vessel (3).

5. An auxiliary repair device according to claim 4, characterised in that the supporting ring (5) is provided with supporting members (9 to 11) which can be brought to engage with the core vessel (13) of the nuclear reactor.

6. An auxiliary repair device according to claim 4, characterised in that lateral supports (20–23), which can be brought to engage with the inner wall of the reactor pressure vessel (3), are provided on the outer circumference of the supporting ring (5) for absorbing the radial contact pressure of the sealing box (6).

7. An auxiliary repair device according to claim 6, characterised in that the lateral supports (20–23) are displaceable via adjusting cylinders (24–27) relative to the inner wall of the reactor pressure vessel (3).

8. An auxiliary repair device according to claim 4, characterised in that the sealing box (6) is radially displaceable relative to the supporting ring (5).

9. An auxiliary repair device according to claim 4, characterised in that the sealing box (6) is displaceable on the supporting ring (5) relative to the supporting ring in the circumferential direction of the latter.

10. An auxiliary repair device according to claim 4, characterised in that the sealing box (6) is height-adjustable on the supporting ring (5) in a guide (37, 38) parallel to the axis of symmetry (39) of the supporting ring.

11. An auxiliary repair device according to one of claims 8, 9 and 10, characterised in that the displacement of the sealing box (6) relative to the supporting ring (5) is controllable by means of hydraulic cylinders (40–43).

12. An auxiliary repair device according to one of claims 9 and 10, characterised in that, during the displacement in a radial direction, the displacement of the sealing box (6) relative to the supporting ring (5) is enforced by the use of guide curves (40a, 41a, 46, 47) adapted to the respective reactor type.

13. An auxiliary repair device according to claim 1, characterised in that the dimension of the sealing box (6) in the direction of the diameter of the reactor pressure vessel (3) is only large enough so that the distributor (14, 17, 18, 19) projecting in a radial direction into the reactor pressure vessel is only just enclosed by the sealing box, and both the supporting ring (5) and the sealing box (6) leave an inside diameter clear during the abutment against the wall of the reactor pressure vessel, which diameter is greater than twice the distance of the outer fuel elements from the axis of symmetry (39) of the reactor pressure vessel.

14. An auxiliary repair device according to claim 1, characterised in that the edges (15) of the sealing box (6) abutting against the wall of the reactor pressure vessel (3) bear sealing lips (16).

15. An auxiliary repair device according to claim 14, characterised in that the sealing lip (16) is approximately L-shaped in cross section and in the region of its broad side resting against the reactor pressure vessel (3) is divided by a flat groove (50) into a narrow sealing rim and a broad sealing lip.

16. An auxiliary repair device according to claim 1, characterised in that the sealing box (6) can be connected to a pump (28) for draining.

17. An auxiliary repair device according to claim 16, characterised in that the pump (28) is controllable by means of a float switch (31) arranged in the sealing box (6).

18. An auxiliary repair device according to claim 16, characterised in that the pump can be built into the sealing box (6).

19. An auxiliary repair device according to claim 1, characterised in that the sealing box (6) can be connected to a ventilation pipe (53) which ends above the water level.

20. An auxiliary repair device according to claim 4, characterised in that the supporting ring (5) is designed so as to be separable.

21. An auxiliary repair device according to claims 1 and 4, characterised in that, for the repair of all four feed water distributors (14, 17, 18, 19) of one and the same reactor pressure vessel (3), the supporting lugs and guides (40a, 41a, 46, 47) of the supporting ring (5) are secured by screws to the supporting ring and are displaceable along its circumference.

22. An auxiliary repair device according to claim 1 or 3, characterised in that the sealing box (6) is made entirely or partly of a transparent material.

23. An auxiliary repair device according to claim 22, characterised in that the sealing box is provided with highly transparent windows (54–60).

24. An auxiliary repair device according to claim 3, characterised in that at least one light source and a television camera can be mounted in the sealing box (6).

25. An auxiliary repair device according to claim 24, characterised in that the television camera can be displaced along the wall of the sealing box and is adjustable.

26. An auxiliary repair device according to claim 3, characterised in that remote-controllable supports can be mounted in the sealing box (6) having probes for eddy current tests, ultrasonic probe heads or devices for carrying out the colour penetration test.

27. An auxiliary repair device according to claim 3, characterised in that remote-controllable supports can be mounted in the sealing box (6) having devices for milling, grinding or welding.

28. An auxiliary repair device according to claim 5 or 9, characterised in that the hydraulic cylinders (24–27, 40–43) can be actuated by pressurised water in order to avoid any impurities.

1/3

FIG 1

FIG 2

FIG 4

3/3

FIG 3